# EUROPÄISCHE PATENTSCHRIFT

(11) **EP 1 902 825 B1**
(45) Veröffentlichungstag und Bekanntmachung des Hinweises auf die Patenterteilung: **09.11.2011**
(21) Anmeldenummer: 06120976.3
(22) Anmeldetag: 20.09.2006
(51) Int. Cl.: B29B 9/16, B29B 13/06, F26B 5/08, F26B 17/22, F26B 17/24

(54) **Vorrichtung zum Entwässern und Trocknen von Feststoffen, insbesondere von unterwassergranulierten Kunststoffen**
Apparatus for dewatering and drying solid materials, especially plastics pelletized using an underwater granulator
Dispositif pour la déshydratation et le séchage de matières solides, notamment des matières synthétiques obtenues par granulation sous l'eau

(43) Veröffentlichungstag der Anmeldung: 26.03.2008
(73) Patentinhaber: ECON Maschinenbau und Steuerungstechnik GmbH, 4061 Pasching (AT)
(72) Erfinder: Remili, Johannes, 4073, Wilhering (AT); Hehenberger, Gerhard, 4622, Eggenberg (AT)
(74) Vertreter: Hübscher, Helmut

(56) Entgegenhaltungen:
- WO-A-2005/068061
- DE-A1- 4 106 248
- DE-C1- 3 328 303
- US-A- 3 458 045
- US-A- 4 476 019
- US-A- 5 321 898
- US-A1- 2002 062 576
- US-A1- 2003 033 725

## Beschreibung

Die vorliegende Erfindung betrifft eine Vorrichtung zum Entwässern und Trocknen von granulierten Feststoffen, insbesondere von unterwassergranulierten Kunststoffen in Form eines Zentrifugaltrockners, wobei das Granulat-Wasser-Gemisch mittels einer der Zentrifugaltrockner vorgeschalteten Siebeinrichtung vom Großteil des Wassers getrennt werden kann. Das Granulat mit dem restlichen, noch anhaftenden Oberflächenwasser wird anschließend der Eintrittsöffnung der Zentrifugaltrockner zugeführt, durch welche es mittels Rotorblätter beschleunigt und am Ende zu einer Austrittsöffnung transportiert wird.

Eine solche Vorrichtung geht beispielsweise aus der DE 10 2004 053 929 A1 hervor, bei der ein Gemisch aus Granulat und Kühlwasser einem Zentrifugaltrockner zugeführt wird, der benachbart zur Kühleinrichtung angeordnet ist. Bei der hierin dargestellten Art der Trocknung des Granulates wird das anhaftende Oberflächenwasser zusammen mit ebenfalls anhaftendem Kunststoffstaub abgeschleudert. Gleichzeitig findet auch eine Verdampfungskühlung durch Trocknung der Oberflächenfeuchtigkeit des Granulats im Luftstrom statt. Zwischen der Kühleinrichtung und dem Zentrifugaltrockner befindet sich ein siebartiger Wasserabscheider.

Der Zentrifugaltrockner weist ein zylindrisches Gehäuse auf, in dem ein zylindrisches, ortsfestes Sieb angeordnet ist. Innerhalb des Siebes ist ein von einem Motor drehantreibbarer Rotor angeordnet, der hochtourig antreibbar ist. Der Rotor weist schaufelartige Arme auf, die das nasse Granulat und das daran noch anhaftende Wasser hochtourig beschleunigt. Durch die Ausgestaltung der Arme wird dabei das Granulat vom unteren Eintritt nach oben gefördert und gleichzeitig entwässert. Das vorhandene Wasser wird durch das Sieb abgeschleudert.

Es verbleibt eine Oberflächen-Restfeuchte auf dem Granulat, die durch Verdampfung im Zentrifugaltrockner entfernt wird. Diese Abkühltrocknung wird unterstützt durch einen Luftstrom, der von oben in das Gehäuse eingesaugt wird und etwa auf dessen halber Höhe von einem Gebläse abgesaugt wird.

DE 33 28 303 C1 offenbart eine andere Vorrichtung gemäß dem Oberbegriff des Anspruchs 1.

Andere bekannte Vorrichtungen der gattungsgemäßen Art weisen statt der schaufelartigen Arme am Rotor festsitzende Prallbleche auf, welche in einem Winkel zur vertikalen Achse angeordnet sind und den vertikalen Transport des Granulats innerhalb der Zentrifugaltrockner von der unten angeordneten Eintrittsöffnung nach oben zur Auslassöffnung bewirken.

Nachteilig bei diesen bekannten Vorrichtungen ist, dass die Zuführung des feuchten Granulates in den Zentrifugaltrockner stets radial erfolgt, wobei das Granulat von den schaufelartigen Armen beziehungsweise von den Prallblechen am Rotor frontal erfasst und im ersten Schritt gegen das ortsfeste Sieb geschleudert werden, von welchem das Granulat zurückprallt und wiederum von den schaufelartigen Armen beziehungsweise von den Prallblechen erfasst wird. Dieser Vorgang wiederholt sich solange, bis das Granulat die Auslassöffnung erreicht und durch diese hindurchtritt. Durch die frontale Erfassung des Granulates ist dieses im Eintrittsbereich einer erhöhten mechanischen Beanspruchung ausgesetzt. Dies führt hier zu erhöhtem Anfall von Kunststoffstaub, der sich im unmittelbaren Nahbereich der Eintrittsöffnung, insbesondere unterstützt durch den Luftwirbel festsetzt und in diesem Bereich auch schwerer mittels Reinigungsflüssigkeiten, welche über Düsen in den Zentrifugaltrocknernraum eingebracht werden, wieder ablösbar ist als im übrigen Innenraum des Zentrifugaltrocknerngehäuses.

Insbesondere bei der Trocknung von empfindlichen Granulaten, besonders bei Verbundgranulaten kann dies soweit gehen, dass die bekannten Zentrifugaltrockner zum Entwässern und Trocknen für diese Granulate überhaupt nicht zur Anwendung kommen können, da hier ein zu hoher Anteil an Granulat durch eine Zentrifugaltrockner der bekannten Bauart beschädigt werden würde.

Das ortsfeste Sieb und die schaufelartigen Rotorarme bzw. die Prallbleche sind im Nahbereich der Eintrittsöffnung durch die frontale Erfassung des Granulates einem wesentlich höheren Verschleiß ausgesetzt als in den oberhalb befindlichen Bereichen. Da auch die Auslassöffnung radial angeordnet ist, kommt es im unmittelbar benachbarten Bereich der Auslassöffnung, insbesondere an ihrer Aufsatz-Kante ebenfalls zu erhöhtem Verschleiß.

Einen weiteren Nachteil bildet die insgesamt wenig wartungsfreundliche Ausgestaltung der Vorrichtung. Die Zentrifugaltrockner muss nach jedem Wechsel des zu trocknenden Granulats betreffend seine Zusammensetzung oder betreffend seine Farbgebung komplett gereinigt werden. Rückstände, die nicht vollständig entfernt werden, bevor die nächste Charge an Kunststoffgranulat die Zentrifugaltrockner durchläuft, verunreinigen dieselbe und führen damit zu erheblichen Qualitätsmängeln.

Hierzu sind üblicherweise innerhalb der Zentrifugaltrockner mehrere Düsen für die Reinigungsflüssigkeit vorgesehen. Dort wo die Anbackung von Kunststoffstaub jedoch besonders begünstigt ist, beispielsweise wie bereits erwähnt im Nahbereich der Eintrittsöffnung, genügt die Eindüsung der Reinigungsflüssigkeit jedoch nicht immer bzw. würde die Reinigung nur bei unverhältnismäßig hoher Menge an Reinigungsflüssigkeit befriedigend ausfallen. Da die Aufbereitungskosten der Reinigungsflüssigkeit jedoch mengenabhängig ist, ist es meist günstiger, die Vorrichtung zu öffnen und die restlichen anhaftenden Verunreinigungen händisch zu lösen und anschließend auszuspülen. Dies erfordert jedoch bei den bekannten Vorrichtungen einen unverhältnismäßig hohen De- und Remontageaufwand.

Die vorliegende Erfindung stellt sich daher die Aufgabe, eine gattungsgemäße Vorrichtung zum Entwässern und Trocknen von Feststoffen, insbesondere von unterwassergranulierten Kunststoffen in Form eines Zentrifugaltrockners zu schaffen, welche die genannten Nachteile des bekannten Standes der Technik zuverlässig vermeidet.

Diese Aufgabe wird durch eine Vorrichtung nach dem Oberbegriff des Anspruch 1 durch die Merkmale in dessen kennzeichnendem Teil gelöst.

Vorteilhafte Weiterbildungen und Ausgestaltungen sind Gegenstand der abhängigen Ansprüche.

Eine vorteilhafte Variante, welche auf die leichtere Reinigung auch bei bekannten Vorrichtungen der gattungsgemäßen Art abzielt, ist Gegenstand des unabhängigen Nebenanspruchs.

Die Erfindung wird nachstehend anhand der Figuren näher erläutert. Darin zeigt:
- Fig. 1: einen Vertikalschnitt durch die Vorrichtung;
- Fig. 2: die Schrägansicht eines horizontalen Schnittes durch den unteren Bereich der Vorrichtung;
- Fig. 3: einen zu Fig. 1 um 90 Grad versetzten Vertikalschnitt durch die Vorrichtung.

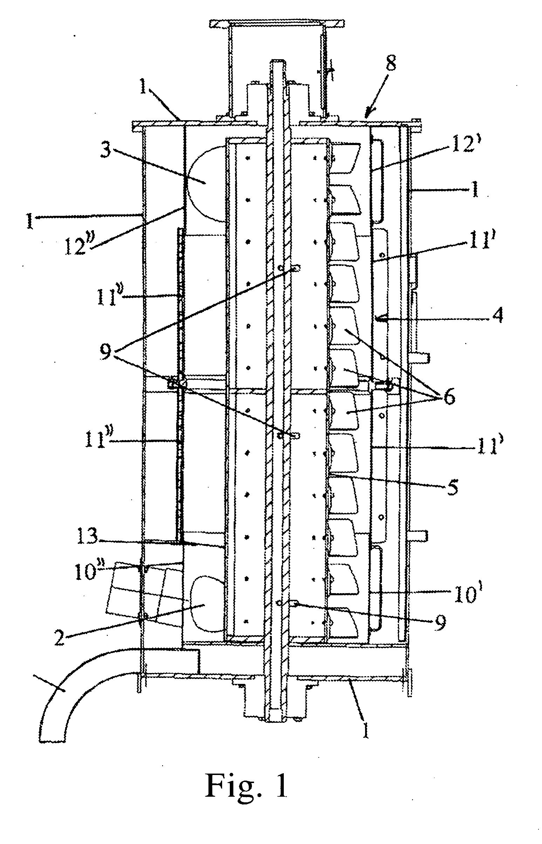

Die erfindungsgemäße Vorrichtung besteht, wie aus Fig. 1 hervor geht, aus einem Gehäuse 1 mit einer Eintrittsöffnung 2 für den mit Oberflächenwasser behafteten Feststoff und einer Austrittsöffnung 3 für den entwässerten Feststoff, einem innerhalb des Gehäuses 1 ortsfesten Siebzylinder 4, einem innerhalb des Siebzylinders 4 angeordneten Rotor 5 und daran im Abstand voneinander befestigten Flügeln 6, einem Wasserablauf 7, sowie Einrichtungen 8, 8' zur Zu- und Ableitung eines die Vorrichtung vertikal durchdringenden Luftstromes.

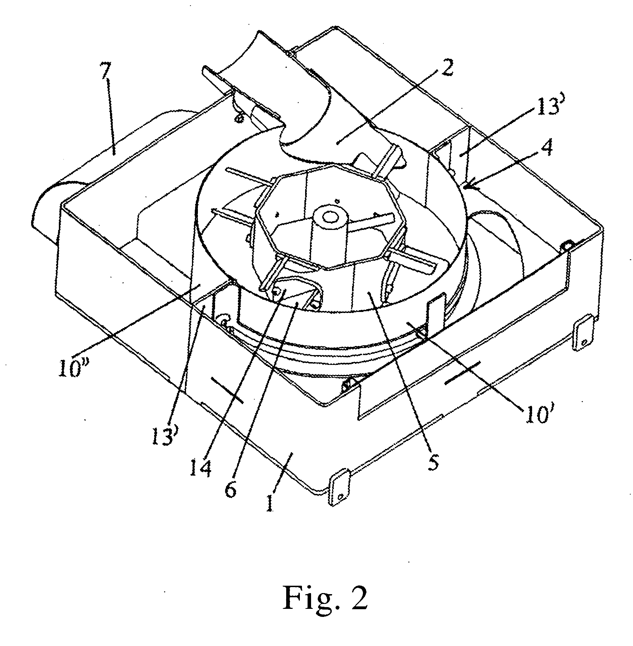

Wie aus Fig. 2 zu erkennen ist, zeichnet sich die erfindungsgemäße Vorrichtung zum Entwässern und Trocknen von Feststoffen, insbesondere von unterwassergranulierten Kunststoffen in Form eines Zentrifugaltrockners dadurch aus, dass die Eintrittsöffnung 2 tangential zum Siebzylinder 4 angeordnet ist. Damit trifft das eintretende Granulat-Wasser-Gemisch im wesentlichen tangential auf den ortsfesten Siebzylinder 4 bzw. den Siebzylinder 10, wobei ein Teil des Wassers durch den Siebzylinder 4 bzw. 10 hindurch tritt. Das Granulat wird von den am hochtourig drehenden Rotor 5 befestigten Flügeln 6 erfasst und im wesentlichen entlang einer Spirale durch die Vorrichtung nach oben bis zur Austrittsöffnung 3 befördert. Dabei wird es von den Flügeln 6 mehrfach gegen die Siebzylinderinnenwand geschleudert, wodurch ein Großteil des anhaftenden Oberflächenwassers abgeschleudert wird und außerhalb des Siebzylinders 4 abläuft um die Vorrichtung beim Wasseraustritt 7 zu verlassen.

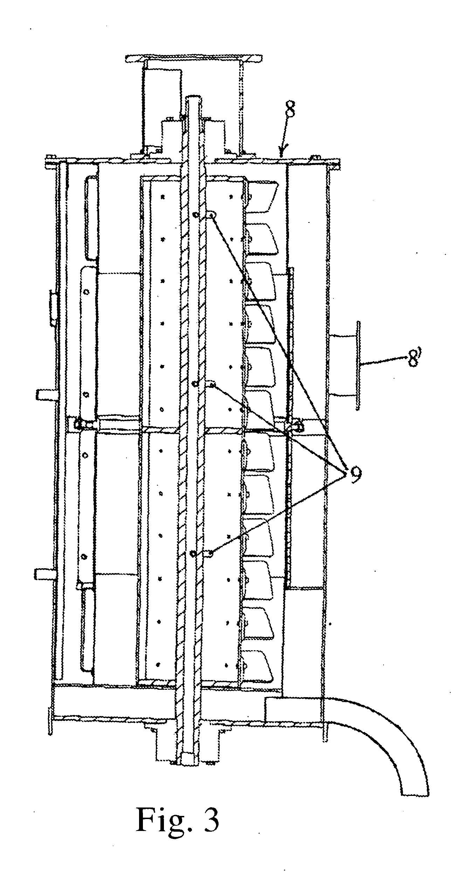

Aus Fig. 1 und insbesondere aus Fig. 3 geht eine zusätzliche, an sich bekannte Einrichtung 8, 8' hervor, mittels welcher und mittels eines hier nicht dargestellten Gebläses ein kontinuierlicher Luftstrom einen Teil der Vorrichtung in vertikaler Richtung durchströmt. Dieser Luftstrom bewirkt, dass die auf der Oberfläche des Granulates verbleibende Restfeuchte durch Verdampfung bzw. durch Abkühltrocknung aus der Vorrichtung entfernt wird. Der Luftstrom dringt bei 8 in das Gehäuse ein und wird etwa auf dessen halber Höhe bei 8' mittels des Gebläses wieder abgesaugt.

Aufgrund der im wesentlichen tangentialen Zuführung des Granulat-WasserGemisches zu dem ortsfesten Siebzylinder 4 bzw. 10 bzw. zum Siebsegment 10' im unteren Bereich der Vorrichtung, wird das Granulat bei seinem Eintritt in die Vorrichtung in erster Linie nur über die Oberfläche des Siebzylinders 4 bzw. 10 bzw. nur über die Oberfläche des Siebsegmentes 10' gewirbelt, so dass zum Großteil nur durch die dabei entstehenden Zentrifugalkräfte das dem Granulat anhaftende Wasser abgeschleudert werden kann. Infolgedessen bleibt die auf das Granulat-Wasser-Gemisch bewirkte Beschleunigung durch die Rotorflügel 6 begrenzt, womit die mechanische Belastung des Granulats bei seinem Eintritt, also zu jenem Zeitpunkt, da es aufgrund des anhaftenden Oberflächenwassers das größere Gewicht hat, im Gegensatz zu bekannten Vorrichtungen der gattungsgemäßen Art erheblich reduziert wird.

Dadurch kommt es zu einer erheblich geringeren Beschädigung insbesondere bei empfindlicheren Granulaten aus Verbundstoff und zu einer erheblich geringeren Abscheidung von Kunststoffstaub bzw. Verbundstoffstaub.

Wie aus den Fig. 1 und 3 ebenfalls erkennbar ist, sind über die Oberfläche des Rotors 5 eine Vielzahl von Düsen 9 angeordnet, durch welche der Vorrichtung Reinigungsflüssigkeit mit erhöhtem Druck zugeführt wird. Die Vorrichtung muss jedes Mal bei einem Wechsel des Granulates möglichst vollständig gereinigt werden um eine Verunreinigung des Folgegranulats durch anhaftende Abscheidungen zu vermeiden. Wie bereits einleitend erläutert, stellt dies bei den bekannten Vorrichtungen der gattungsgemäßen Art ein besonderes Problem dar, da sich diese Abscheidungen über die Höhe der Vorrichtung verteilt besonders im unteren Bereich, und hier besonders rund um die Eintrittsöffnung 2 vermehrt ansammeln.

Um die Reinigung in diesem Bereich effektiver zu gestalten, hat es sich als vorteilhaft erwiesen, den ortsfesten Siebzylinder 4 aus mindestens drei vertikal übereinander angeordneten Siebzylindern 10, 11 und 12 zu bilden, von denen jeder Siebzylinder 10, 11 und 12 aus mindestens zwei Segmentschalen 10', 10", 11', 11", 12', 12" zusammengesetzt ist. Dabei ist der unterste Siebzylinder 10, wie aus Fig. 2 hervorgeht, aus einer siebförmigen Segmentschale 10' und einer vollflächig geschlossenen Segmentschale 10" zusammengesetzt. Die Eintrittsöffnung 2 liegt dabei innerhalb der geschlossenen Segmentschale 10". Zusätzlich ist die geschlossene Segmentschale 10" zur Innenwand des Gehäuses 1 hin durch ein Deckelement 13 abgedeckt, dessen in Fig. 2 nicht sichtbarer horizontaler Bereich bevorzugt eine geringe Neigung aufweist, um das Abrinnen der Reinigungsflüssigkeit zu unterstützen.

Der Aufbau der Siebzylinder 10, 11 und 12 aus mindestens zwei Segmentschalen 10', 10", 11', 11", 12', 12" begünstigt auch eine leichtere Demontage des Siebzylinders 4 beim Auswechseln abgenützter Flügel 6. Es versteht sich von selbst, dass der Siebzylinder 11 bei höherer Bauart auch aus zwei oder mehr gleichartigen Siebzylindern 11 bestehen kann. Die Siebzylinder 10, 11 und 12 sind untereinander in geeigneter Weise verbunden.

Dieser Aufbau des unteren Siebzylinders 10 aus einer siebförmigen Segmentschale 10' und einer vollflächig geschlossenen Segmentschale 10" unterstützt in besonders vorteilhafter Weise die Wirkung der tangential angeordneten Eintrittsöffnung 2 welche hier insbesondere innerhalb der vollflächig geschlossenen Segmentschale 10" angeordnet ist. In einer vorteilhaften Weiterbildung wird auch der oberste Siebzylinder 12 aus einer siebförmigen Segmentschale 12' und einer vollflächig geschlossenen Segmentschale 12" gebildet, womit die abrasive Abnutzung entlang der Kante zur Austrittsöffnung 3 erheblich reduziert werden kann. Dieser Effekt wird in einer vorteilhaften Weiterentwicklung noch dadurch unterstützt, dass auch die Austrittsöffnung 3 tangential zum Siebzylinder 12 und hier insbesondere innerhalb der vollflächig geschlossenen Segmentschale 12" angeordnet ist .

In einer weiteren vorteilhaften Weiterbildung sind die Flügel 6 über daran angeformte Montageflächen 14 einzeln lösbar mit dem Rotor 5 verbunden. Durch diese Ausgestaltung wird es erstmals möglich, die Montagewinkel der Flügel 6 über die Rotorachse verteilt unterschiedlich groß auszuwählen, womit das Transportströmungsverhalten des Granulats vorteilhaft beeinflussbar ist. Auch kann durch diese Maßnahme die Ausgestaltung der Vorrichtung vorteilhaft auf das zu trocknende Material des Granulats optimiert werden, indem über den Montagewinkel die Prallkräfte beeinflussbar werden.

Da die Flügel 6 naturgemäß einem sehr hohen Verschleiß ausgesetzt sind, wobei dieser Verschleiß entlang der Rotorachse unterschiedlich groß ausfällt, wird es durch die Montierbarkeit einzelner Flügel erstmals möglich, die Flügel 6 zu unterschiedlichen Zeitpunkten zu erneuern. Hier zeichnet sich der Aufbau des Siebzylinders 4 aus mehreren Siebzylindern 10, 11 und 12 als besonders montagefreundlich aus.

Um die Standzeiten der Flügel zu erhöhen, hat es sich auch als vorteilhaft erwiesen, einen Teil der Flügel oder alle Flügel einseitig mit einer Verschleißschutzschicht zu beaufschlagen oder aus einem metallischen Trägermaterial mit verschleißfester Oberfläche zu fertigen.

Weiters wird die Standzeit der unteren Halbschale 10" und der oberen Halbschale 12" erhöht, indem diese mit einer Verschleißschutzschicht beaufschlagt sind oder aus einem metallischen Trägermaterial mit verschleißfester Oberfläche gefertigt sind.

## Patentansprüche

1. Vorrichtung zum Entwässern und Trocknen von Feststoffen, in der Form eines Zentrifugaltrockners, bestehend aus einem Gehäuse (1) mit einer Eintrittsöffnung (2) für den mit Oberflächenwasser behafteten Feststoff und einer Austrittsöffnung (3) für den entwässerten Feststoff, einem innerhalb des Gehäuses (1) ortsfesten Siebzylinder (4), einem innerhalb des Siebzylinders (4) angeordneten Rotor (5) und daran im Abstand voneinander befestigten Flügeln (6), einem Wasserablauf (7), sowie Einrichtungen (8, 8') zur Zu- und Ableitung eines die Vorrichtung vertikal durchdringenden Luftstromes, **dadurch gekennzeichnet, dass** die Eintrittsöffnung (2) tangential zum Siebzylinder (4, 10), angeordnet ist.

2. Vorrichtung nach Anspruch 1, **dadurch gekennzeichnet, dass** die Austrittsöffnung (3) tangential zum Siebzylinder (4, 12) angeordnet ist.

3. Vorrichtung nach Anspruch 1 oder 2, **dadurch gekennzeichnet, dass** der ortsfeste Siebzylinder (4) aus mindestens drei vertikal übereinander angeordneten Siebzylindern (10, 11, 12) besteht, von denen jeder Siebzylinder (10, 11, 12) aus mindestens zwei Segmentschalen (10', 10", 11', 11 ", 12', 12") zusammengesetzt ist, dass der unterste Siebzylinder (10) aus einer siebartigen Segmentschale (10') und einer geschlossenen Segmentschale (10") zusammengesetzt ist.

4. Vorrichtung nach Anspruch 3, **dadurch gekennzeichnet, dass** die Eintrittsöffnung (2) innerhalb der geschlossenen Segmentschale (10") liegt und dass die geschlossene Segmentschale (10") zur Innenwand des Gehäuses (1) hin durch ein Deckelement (13, 13') abgedeckt ist, welches in seinem horizontalen Abschnitt (13) bevorzugt schräg angeordnet ist.

5. Vorrichtung nach einem der vorstehenden Ansprüche, **dadurch gekennzeichnet, dass** der oberste Siebzylinder (12) aus einer siebartigen Segmentschale (12') und einer geschlossenen Segmentschale (12") zusammengesetzt ist.

6. Vorrichtung nach Anspruch 5, **dadurch gekennzeichnet, dass** die Austrittsöffnung (3) innerhalb der geschlossenen Segmentschale (12") liegt.

7. Vorrichtung nach einem der vorstehenden Ansprüche, **dadurch gekennzeichnet, dass** die Flügel (6) über angeformte Montageflächen (14) einzeln lösbar mit dem Rotor (5) verbunden sind.

8. Vorrichtung nach einem der vorstehenden Ansprüche, **dadurch gekennzeichnet, dass** der Montagewinkel der Flügel (6) über die Rotorachse verteilt unterschiedlich groß ist.

9. Vorrichtung nach einem der vorstehenden Ansprüche, **dadurch gekennzeichnet, dass** ein Teil der Flügel (6) oder alle Flügel (6) einseitig mit einer Verschleißschutzschicht beaufschlagt sind.

10. Vorrichtung nach einem der vorstehenden Ansprüche, **dadurch gekennzeichnet, dass** die untere geschlossene Halbschale (10") mit einer Verschleißschutzschicht beaufschlagt ist.

11. Vorrichtung nach einem der vorstehenden Ansprüche, **dadurch gekennzeichnet, dass** die obere geschlossene Halbschale (12") mit einer Verschleißschutzschicht beaufschlagt ist.

## Claims

1. Apparatus for dewatering and drying solid materials, in the form of a centrifugal dryer, consisting of a housing (1) having an inlet opening (2) for the solid material, which is loaded with surface water, and an outlet opening (3) for the dewatered solid material, a screen cylinder (4) positionally fixed within the housing (1), a rotor (5) disposed within the screen cylinder (4) and wings (6) attached to the rotor at a mutual spaced interval, a water drain (7), and devices (8, 8') for supplying and discharging an airstream passing vertically through the apparatus, **characterised in that** the inlet opening (2) is disposed tangentially with respect to the screen cylinder (4, 10).

2. Apparatus as claimed in claim 1, **characterised in that** the outlet opening (3) is disposed tangentially with respect to the screen cylinder (4, 12).

3. Apparatus as claimed in claim 1 or 2, **characterised in that** the positionally fixed screen cylinder (4) consists of at least three screen cylinders (10, 11, 12) which are disposed vertically one above the other and of which each screen cylinder (10, 11, 12) is composed of at least two segment shells (10', 10", 11', 11 ", 12', 12"), that the lowermost screen cylinder (10) is composed of a screen-like segment shell (10') and of a closed segment shell (10").

4. Apparatus as claimed in claim 3, **characterised in that** the inlet opening (2) is located within the closed segment shell (10") and that the closed segment shell (10") is covered in the direction towards the inner wall of the housing (1) by means of a cover element (13, 13'), of which the horizontal portion (13) is disposed preferably in an oblique manner.

5. Apparatus as claimed in any one of the preceding claims, **characterised in that** the uppermost screen cylinder (12) is composed of a screen-like segment shell (12') and of a closed segment shell (12").

6. Apparatus as claimed in claim 5, **characterised in that** the outlet opening (3) is located within the closed segment shell (12").

7. Apparatus as claimed in any one of the preceding claims, **characterised in that** the wings (6) are each releasably connected to the rotor (5) via integrally formed mounting surfaces (14).

8. Apparatus as claimed in any one of the preceding claims, **characterised in that** the size of the mounting angle of the wings (6) varies over the rotor spindle.

9. Apparatus as claimed in any one of the preceding claims, **characterised in that** some of the wings (6) or all of the wings (6) are provided on one side with a wear-protection layer.

10. Apparatus as claimed in any one of the preceding claims, **characterised in that** the lower closed half shell (10") is provided with a wear-protection layer.

11. Apparatus as claimed in any one of the preceding claims, **characterised in that** the upper closed half shell (12") is provided with a wear-protection layer.

## Revendications

1. Dispositif pour la deshydratation et le séchage de matières solides, sous la forme d'un sécheur centrifuge, composé d'un boîtier (1) avec une ouverture d'entrée (2) pour la matière solide comportant de l'eau de surface et d'une ouverture de sortie (3) pour la matière solide asséchée, d'un tamis cylindrique (4) fixé dans le boîtier (1), d'un rotor (5) disposé dans le tamis cylindrique (4) et d'ailes (6) fixées sur ce rotor espacées les unes des autres, d'un écoulement d'eau (7) ainsi que de dispositifs (8, 8') pour l'amenée et l'évacuation d'un flux d'air traversant verticalement le dispositif, **caractérisé en ce que** l'ouverture d'entrée (2) est disposée tangentiellement par rapport au tamis cylindrique (4, 10).

2. Dispositif selon la revendication 1, **caractérisé en ce que** l'ouverture de sortie (3) est disposée tangentiellement par rapport au tamis cylindrique (4, 12).

3. Dispositif selon la revendication 1 ou 2, **caractérisé en ce que** le tamis cylindrique (4) fixe est composé d'au moins trois tamis cylindriques (10, 11, 12) disposés verticalement les uns au dessus des autres, chaque tamis cylindrique (10, 11, 12) étant constitué d'au moins deux coques segmentées (10', 10", 11', 11", 12', 12"), **en ce que** le tamis cylindrique inférieur (10) est constitué d'une coque segmentée (10') en forme de tamis et d'une coque segmentée (10") fermée.

4. Dispositif selon la revendication 3, **caractérisé en ce que** l'ouverture d'entrée (2) est placée dans la coque segmentée (10") fermée et **en ce que** la coque segmentée (10") fermée est couverte en direction de la paroi intérieure du boîtier (1) par un élément de couverture (13, 13') lequel est disposé de préférence obliquement dans sa section (13) horizontale.

5. Dispositif selon l'une des précédentes revendications, **caractérisé en ce que** le tamis cylindrique supérieur (12) est constitué d'une coque segmentée (12') en forme de tamis et d'une coque segmentée (12") fermée.

6. Dispositif selon la revendication 5, **caractérisé en ce que** l'ouverture de sortie (3) est placée dans la coque segmentée (12") fermée.

7. Dispositif selon l'une des précédentes revendications, **caractérisé en ce que** les ailes (6) sont reliées séparément de manière amovible au rotor (5) par le biais de faces de montage (14) réalisées par formage.

8. Dispositif selon l'une des précédentes revendications, **caractérisé en ce que** l'angle de montage des ailes (6), réparti sur l'axe du rotor, est de valeurs différentes.

9. Dispositif selon l'une des précédentes revendications, **caractérisé en ce qu'**une partie des ailes (6) ou toutes les ailes (6) reçoit/reçoivent d'un côté une couche de protection contre l'usure.

10. Dispositif selon l'une des précédentes revendications, **caractérisé en ce que** la demi-coque fermée (10") inférieure reçoit une couche de protection contre l'usure.

11. Dispositif selon l'une des précédentes revendications, **caractérisé en ce que** la demi-coque fermée (12") supérieure reçoit une couche de protection contre l'usure.
